# EUROPÄISCHE PATENTSCHRIFT

(11) **EP 0 374 599 B1**
(45) Veröffentlichungstag und Bekanntmachung des Hinweises auf die Patenterteilung: **02.08.1995**
(21) Anmeldenummer: 89122562.5
(22) Anmeldetag: 07.12.1989
(51) Int. Cl.: B65H 45/08

(54) **Verfahren zur Herstellung mehrlagiger verstreckter Bändchen**
Method for manufacturing stretched multi-layer webs
Procédé de fabrication de bandes étirées multicouches

(30) Priorität: 19.12.1988 DE 3842764; 20.03.1989 DE 3909092
(43) Veröffentlichungstag der Anmeldung: 27.06.1990
(73) Patentinhaber: Windmöller & Hölscher, D-49525 Lengerich (DE)
(72) Erfinder: Bosse, Frank, D-4542 Tecklenburg (DE); Lage, Karl-Heinz, D-4540 Lengerich (DE); Klose, Rainer, D-4540 Lengerich (DE)
(74) Vertreter: Gossel, Hans K., Dipl.-Ing.

(56) Entgegenhaltungen:
- EP-A- 0 247 952
- DE-A- 1 510 636
- DE-A- 3 000 686
- FR-A- 1 306 629
- FR-A- 2 094 490
- FR-A- 2 158 727
- GB-A- 2 193 734
- US-A- 3 514 368

## Beschreibung

Die Erfindung betrifft ein Verfahren zur Herstellung zumindest einfach gefalteter Bändchen aus thermoplastischem Kunststoff, vorzugsweise zur Herstellung hochfester Gewebe, bei dem die Bändchen vor ihrem Aufspulen auf die zur Weiterverarbeitung vorgesehene Spule auf sich gefaltet werden.

Großvolumige, sogenannte Containersäcke bestehen aus einem reißfesten Gewebe aus verstreckten Bändchen aus thermoplastischem Kunststoff, die diesem Gewebe eine so große Festigkeit verleihen, daß die Containersäcke mit Füllgewichten von beispielsweise mehr als 1t belastet werden können. Um die Füllgewichte noch weiter erhöhen zu können, ist es erforderlich, das Quadratmetergewicht des Gewebes zu erhöhen.

Aus FR-A-1 306 629 ist ein Verfahren nach dem Oberbegriff des Patentanspruchs 1 zur Herstellung mehrlagiger, auf sich selbst gefalteter Bändchen aus thermoplastischem Kunststoff bekannt, bei dem die Bändchen verstreckt und vor oder nach ihrer Verstreckung auf sich gefaltet werden, wobei die Bändchen vor ihrem Aufspulen auf eine zur Weiterverarbeitung vorgesehene Spule und vor ihrer Thermofixierung auf sich gefaltet werden. Trotz der Thermofixierung läßt sich nicht mit Sicherheit ausschließen, daß die Bändchen später auffedern können, so daß sich Schwierigkeiten bei der Weiterverarbeitung ergeben.

Aufgabe der Erfindung ist es daher, ein Verfahren der eingangs angegebenen Art zu schaffen, bei dem mit Sicherheit vermieden ist, daß sich die Bändchen nach ihrer Thermofixierung wieder auffalten.

Erfindungsgemäß wird diese Aufgabe durch das kennzeichnende Merkmal des Patentanspruchs gelöst.

Die Bändchen bestehen im wesentlichen aus einer Mischung aus 90-70% Polypropylen und 10-30% eines Kunstoffes. Propylene eignen sich besonders gut zur Herstellung von Bändchen, da insbesondere bei diesen durch uniaxiales Recken eine räumliche Orientierung der Ketten erreicht werden kann, die zu einer Festigkeitssteigerung führt. Andererseits neigen jedoch Polypropylenbändchen nach ihrer Faltung wieder zum Auffalten, da diese nicht oder nur wenig miteinander verkleben, und auch durch Thermofixierung die Faltung nicht sicher fixiert werden kann. Werden jedoch den Polypropylenen Kunststoffe, die unter Wärme eine größere Adhäsion aufweisen als das Grundmaterial Propylen, in einer Menge von 10 bis 30 % zugemischt, wird die Faltung stabil, da die aufeinandergefalteten Lagen unter Wärmeeinwirkung miteinander verkleben. Auf diese Weise wird die unerwünschte Auffaltung der gefalteten Bändchen mit Sicherheit vermieden.

Eine Vorrichtung zur Herstellung von auf sich gefalteten, verstreckten und thermofixierten Bändchen nach dem erfindungsgemäßen Verfahren kann aus einem Streck- und Fixierwerk mit Galetten, über die die Bändchenschar in Form aufeinanderfolgender, gegensinnig offener Schlaufen läuft, bestehen. Dabei sind zwischen zwei Galetten Faltbleche geschaltet, von denen jedes aus einem zu dem einlaufenden Bändchen im wesentlichen parallelen Bodenblech und aus an dieses seitlich anschließenden, schalenförmigen Faltblechen besteht, deren Öffnungen einander zugewandt sind und die sich einander in Laufrichtung bei kleiner werdendem Krümmungsradius bis auf einen Abstand annähern, der etwa der Breite der ungefalteten Mittelteile der Bändchen entspricht. Soll ein einander überlappendes Falten der eingeschlagenen Seitenteile der Bändchen erfolgen, nähern sich die einander zugewandten schalenförmigen Faltbleche einander in Laufrichtung bei kleiner werdendem Krümmungsradius in unsymmetrischer Form bis auf einen Abstand an, der etwa der Breite der ungefalteten Mittelteile der Bändchen entspricht.

Ausführungsbeispiele der Erfindung werden nachstehend anhand der Zeichnung näher erläutert. In dieser zeigt
- Fig. 1: eine Seitenansicht einer Bändchenreckstrecke in schematischer Darstellung,
- Fig. 2: eine zwischen zwei Galetten des Streckwerks der Bändchenreckanlage angeordnete Falteinrichtung für die Bändchen im Längsschnitt,
- Fig. 3: eine Ansicht der Falteinrichtung in Richtung des Pfeils in Fig. 2.
- Fig.3a bis Fig.3d: Schnitte durch die in den Falteinrichtungen gefalteten Bändchen zur Darstellung des Profils der gefalteten Bändchen,
- Fig.4: eine Falteinrichtung zur symmetrischen Faltung der Bändchen in Draufsicht und Rückenansicht
- Fig.5: eine Falteinrichtung zum überlappenden Falten der Seitenteile der Bändchen in Draufsicht und Rückansicht und
- Fig.6: eine Vorrichtung zum Falten kalter verstreckter Bändchen auf sich selbst in schematischer Seitenansicht.

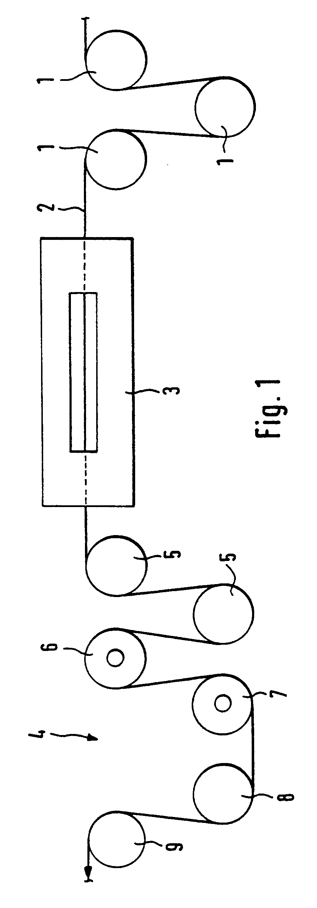

In der schematisch dargestellten Bänchenreckanlage nach Fig.1 läuft eine Schar von aufeinanderliegenden Bändchen in Schlaufenform über die Walzen 1 eines Haltwerkes. Von dem Haltewerk läuft die Schar der übereinanderliegenden Bänchen 1 in einen Heißluftofen 3 ein, der üblicher Bauart ist. Die aus dem Heißluftofen 3 austretender Schar der Bändchen 2 durchläuft sodann ein sogenanntes Streck- und Fixierwerk 4. Dieses besteht aus den Galetten 5 bis 7, von denen eine oder mehrere beheizt sind. Die Galetten 5 bis 7 bilden das sogenannte Streckwerk. Im Anschluß an die letzte beheizte Walze oder Galette durchläuft die Schar der Bändchen 2 den sogenannten Fixierteil des Streck- und Fixierwerkes. Dieser wird durch die Galetten 8 und 9 gebildet, deren Umfangsgeschwindigkeit kleiner ist als die Umfangsgeschwindigkeit der letzten Galette 7 des Streckwerkes, so daß die einzelnen Bändchen 2 zurückschrumpfen können und dabei fixiert werden.

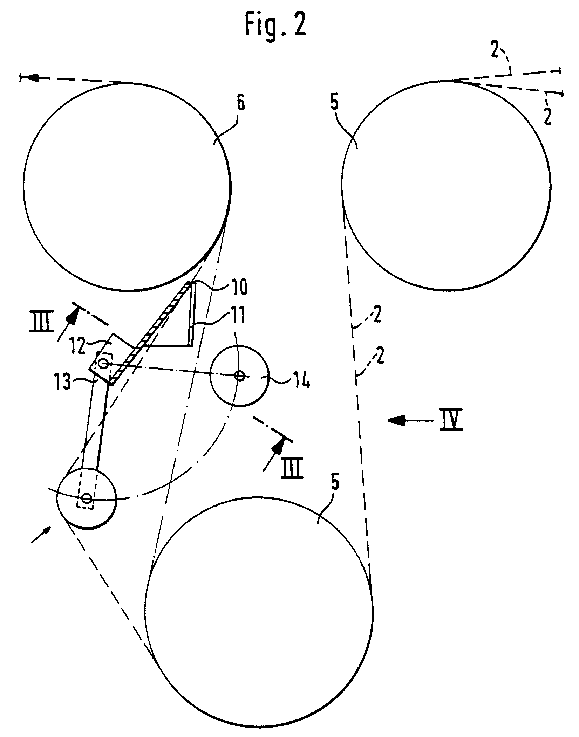

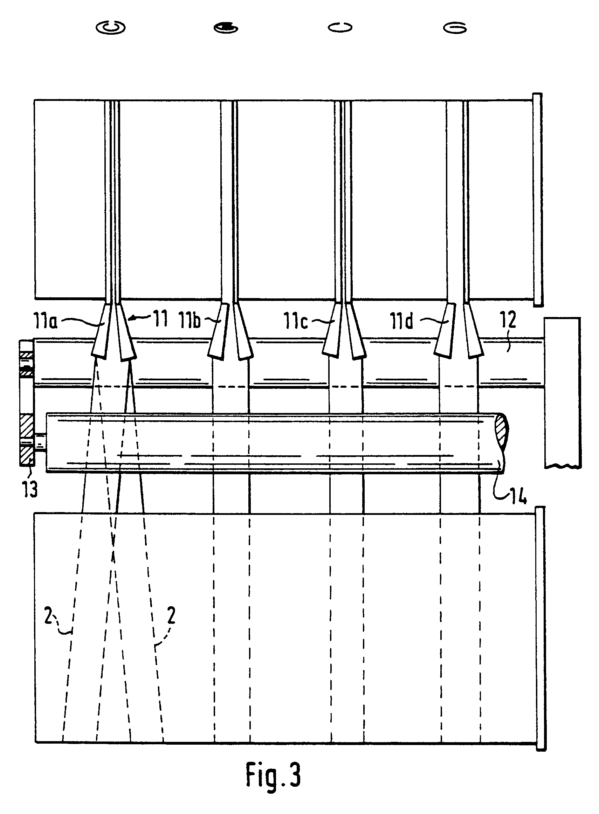

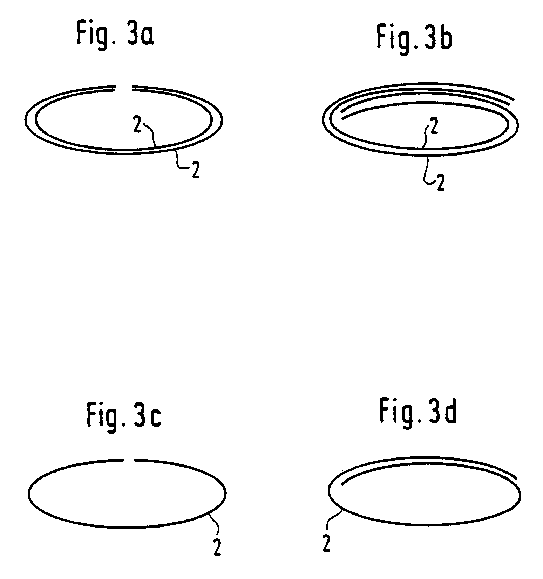

Wie aus Fig.2 ersichtlich ist, ist zwischen der Galette 5, auf die die übereinander liegenden Bändchen auflaufen, und der Galette 6 eine Einrichtung zum Falten der einzelnen Bändchen vorgesehen. Diese Einrichtung besteht im wesentlichen aus einer ebenen Grundplatte 10, die von einer in Laufrichtung der Bändchen zusammenlaufenden geschlitzten konischen Abdeckung 11 umgeben ist. Das Faltstück ist auf einem gehäusefesten Träger 12 einstellbar montiert, der, wie aus Fig.3 ersichtlich ist, seitliche Schwenkarme 13 aufweist. In diesen seitlichen Schwenkarmen 13 ist eine Walze 14 gelagert, die in nicht dargestellter Weise sowohl in der mit vollen Linien dargestellten Arbeitsstellung als auch in der inneren neutralen Stellung festgelegt werden kann. Durch die Falteinrichtung werden die Bändchen 2 auf sich gefaltet. Die gefalteten Bändchen 2 sind oberhalb der Walze 6 in Fig.3 und in den Fig.3a bis 3d im Querschnitt dargestellt. Die gefalteten Bändchen werden durch die nachfolgende beheizte Galette 6 aufgeheizt, so daß die aufeinanderliegenden Lagen zusätzlich noch miteinander verkleben können.

In Fig.3 sind nur beispielhaft vier unterschiedliche Falteinrichtungen 10,11a, 11b, 11c, 11d dargestellt. Der Falteinrichtung 10, 11a, werden zwei Bändchen 2 zugeführt, die erst im Bereich der Falteinrichtung etwa deckungsgleich übereinanderliegend zusammenlaufen.

Der Falteinrichtung 10, 11b, werden zwei deckungsgleiche übereinander liegende Folienbändchen zugeführt.

In die Falteinrichtungen 10,11c und 10,11d laufen einlagige Folienbändchen ein, wobei die Falteinrichtung 10,11d die Seitenteile des Folienbändchens derart einander überlappend einschlägt, daß sich ein dreilagiges Folienbändchen mit dem aus Fig.3d ersichtlichen Querschnitt ergibt.

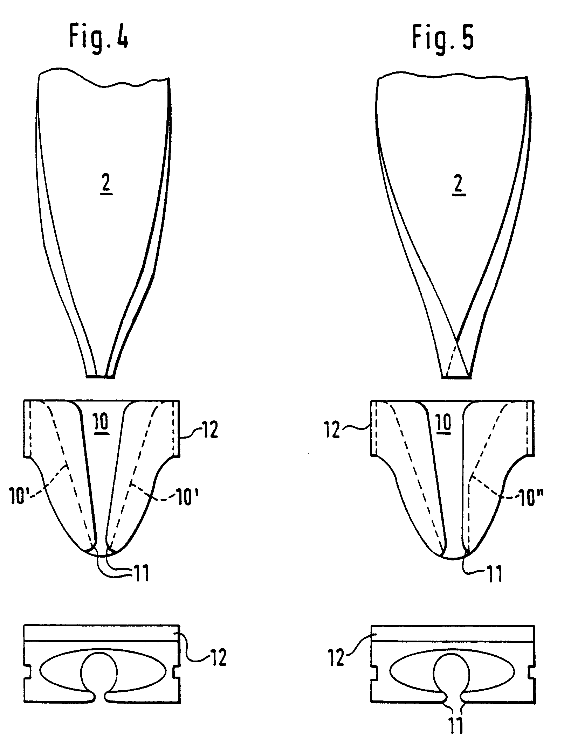

Aus Fig.4 ist eine Falteinrichtung 10,11 ersichtlich, mit dem ein einzelnes oder zwei deckungsgleich übereinanderliegende Folienbändchen derart gefaltet werden können, daß sich das aus den Fig.3a und 3c ersichtliche Querschnittsprofil der gefalteten Bändchen ergibt. Zu diesem Zweck nähern sich bei der Falteinrichtung 10,11 nach Fig.4 die Faltbleche 11 in Durchlaufrichtung bei kleiner werdendem Krümmungsradius symmetrisch bis auf einen Abstand an, der etwa der Breite des ungefalteten Mittelteils der Bändchen entspricht. In Fig.4 ist durch die gestrichelten Linien 10′ der Bereich der Falteinrichtung angedeutet, in dem die Krümmung der die Faltung bewirkenden Seitenteile beginnt.

Aus Fig.5 ist eine Falteinrichtung 10,11 ersichtlich, dessen Faltbleche oder Einfaltteile 11 sich einander in Laurichtung bei kleiner werdendem Krümmungsradius unsymmetrisch bis auf einen Abstand einander annähern, der etwa der Breite des ungefalteten Mittelteils der Bändchen 2 entspricht. Die unsymmetrische Ausbildung der der Faltung dienenden Teile ist durch die gestrichelte Linie 10˝ angedeutet, die den Verlauf des Beginns der Krümmung anzeigt.

Auch mit der Falteinrichtung nach Fig.4 lassen sich Folienbändchen mit einem Querschnitt nach den Fig.3b und 3d dadurch falten, daß beispielsweise bei Verwendung eines 9mm breiten Bändchens die Breite des Fadenführers am Ausgang nur etwa 3 mm beträgt.

Durch Verwenden von Faltblechen, die an ihrem Ausgang schmaler sind als die Hälfte der Bändchenbreite, lassen sich Mehrfachfaltungen erreichen, die aber nicht immer in genau kontrollierter Weise erfolgen.

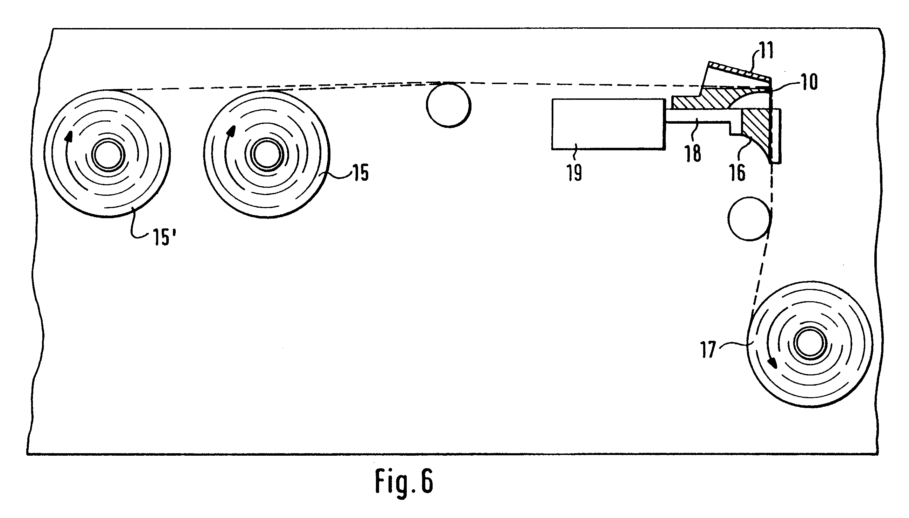

Fig.6 zeigt eine andere Vorrichtung, bei der breitere Bändchen von den Spulen 15,15′ in der Weise abgewickelt werden, daß diese etwa deckungsgleich übereinanderliegend der Falteinrichtung 10,11 zugeführt werden. Die breiteren abgewickelten und übereinanderliegenden Bändchen werden durch die Falteinrichtung 10,11 gezogen und dadurch auf sich gefaltet. Die gefalteten Bändchen werden in der dargestellten Weise umgelenkt und über ein Führungsstück 16 auf eine zweite Spule 17 als auf sich gefaltete Bändchen aufgewickelt. Der Halter 18 für die Falteinrichtung 10,11, die in grundsätzlich gleicher Weise aufgebaut ist, wie die anhand der Fig.2 bis 5 beschriebenen, und das Führungsstück 16 sind in einem Gehäuse 19 parallel zu den Achsen der Spulen 15,17 hin- und herbewegbar gelagert, um die Spule 18 über die gesamte Breite gleichmäßig bewickeln zu können.

Anstatt von den Spulen 15,15′ können die breiten Bändchen selbstverständlich auch direkt von einer Reckstrecke angeliefert werden.

## Patentansprüche

1. Verfahren zur Herstellung zumindest einfach gefalteter Bändchen aus thermoplastischem Kunststoff, vorzugsweise zur Herstellung hochfester Gewebe, bei dem die Bändchen vor ihrem Aufspulen auf die zur Weiterverarbeitung vorgesehene Spule auf sich gefaltet werden,
**dadurch gekennzeichnet**,
daß die Bändchen im wesentlichen aus einer Mischung aus 90 - 70 % Polypropylen und 10 - 30 % eines Kunststoffes bestehen, der unter Wärme eine größere Adhäsion aufweist als das Grundmaterial Polypropylen.

## Claims

1. Method for manufacturing at least singly folded tapes of thermoplastic material, preferably for manufacturing high-strength fabric, in which the tapes are folded on themselves before their winding up onto the reel provided for further processing, characterized in that the tapes substantially consist of a mixture of 90-70% polypropylene and 10-30% of a plastic which has a greater adhesion under heat than the base material polypropylene.

## Revendications

1. Procédé de fabrication de bandes pliées au moins une fois en matière thermoplastique, avantageusement pour la fabrication de tissus très résistants, où les bandes, avant de les enrouler sur la bobine prévue pour un traitement ultérieur, sont repliées sur elles-mêmes
caractérisé en ce que
les bandes se composent essentiellement d'un mélange de 90-70 % de polypropylène, et de 10-30 % d'une matière synthétique qui, à la chaleur, présente une plus forte adhérence que le matériau de base, le polypropylène.
